# EUROPÄISCHE PATENTANMELDUNG

(11) **EP 1 239 369 A1**
(43) Veröffentlichungstag der Anmeldung: **11.09.2002**
(21) Anmeldenummer: 01105702.3
(22) Anmeldetag: 07.03.2001
(51) Int. Cl.: G06F 11/18, G06F 11/16

(54) **Fehlertolerante Rechneranordnung und Verfahren zum Betrieb einer derartigen Anordnung**

(71) Anmelder: SIEMENS AKTIENGESELLSCHAFT, 80333 München (DE)
(72) Erfinder: Kaiser, Oliver, Dr., 80797 München (DE)

(57) **Zusammenfassung**

Bei einer erfindungsgemäßen Rechneranordnung (1) mit einer Vermittlungs-(10) und einer Bearbeitungsebene (30):
- ist die Vermittlungsebene (10) durch mindestens einen Vermittlungs-Rechner (11,12,1n) gebildet, welcher ertüchtigt ist, ankommenden Anforderungsdaten (7) eine Zeitmarkierung zuzuordnen,
- ist die Bearbeitungsebene (30) durch mindestens zwei Bearbeitungs-Rechner (201,202,20x,211,212,21y,221,222,22z) gebildet, welche parallel von der Vermittlungsbene (10) mit den Anforderungsdaten versorgt sind, und
- sind die Bearbeitungs-Rechner (201,202,20x,211,212,21y,221,222,22z) sind jeweils ertüchtigt, die Anforderungsdaten (7) dann en einem nächsten Bearbeitungsschritt zu bearbeiten, wenn der aktuelle Wert der Zeitmarkierung in einen jeweils signifikanten Wertebereich fällt.
Auf diese Weise wird mit einfachen Mitteln eine "implizite Synchronisierung" der Rechner realisiert.

## Beschreibung

Die Erfindung betrifft eine Rechneranordnung, welche mehrere Rechner umfasst, die untereinander hard- und/oder softwaremäßig derart verknüpft sind, dass die Funktionalität der Rechneranordnung nach außen durch den Ausfall eines oder mehrerer der Rechner nicht oder nur unwesentlich beeinträchtigt ist (fehlertolerante Rechneranordnung).

Die Erfindung betrifft weiterhin ein Verfahren zum Betrieb einer derartigen Anordnung.

In modernen Gesellschaften werden bereits heute eine große Anzahl an Dienstleitungen, Kommunikationsverbindungen, Überwachungsaufgaben usw. mit Hilfe von digitalen Rechnern realisiert. Beispielsweise drängt die Bestellung von Waren über das Internet die bis vor kurzem noch übliche Bestellung per Briefpost immer mehr zurück.

Bei einem derartigen Bestellvorgang benutzt der Kunde seinen mit dem Internet verbundenen Computer dazu, sich bei einem Server der anbietenden Firma einzuwählen, um die dort vorhandene Bestell-Software für seinen Bestell-Auftrag zu benutzen.

Der Kunde bemerkt beim Bestellvorgang nicht, von wie vielen verschiedenen Rechnern sein Bestellvorgang gleichzeitig oder nacheinander bearbeitet wird; solange kein Fehler während des Bestellvorgangs auftritt, stellt sich die Bestellsituation für den Kunden so dar, als ob er mit nur einem Rechner als "Ansprechpartner" kommunizieren würde.

Wenn jedoch ein Schritt des Bestellvorgangs fehl schlägt, so bemerkt dies der Kunde häufig dadurch, dass er bereits eingegebene Informationen noch einmal eingeben muss, da wegen eines Fehlers irgend eines der Rechner des Bestellsystems Informationen verloren gegangen sind.

Derartige über das Internet bedienbare Bestellsysteme sind bekannt und werden tagtäglich von Millionen von Nutzern bedient.

Nachteilig bei derartigen Systemen ist, dass, obwohl diese üblicherweise aus einer Mehrzahl von Rechnern bestehen, der Ausfall eines dieser Rechner zum Ausfall des gesamten Rechnersystems oder zumindest zu einem Verlust einer Teilfunktion und damit zum Verlust an Information und Bearbeitungszeit. Dieser Nachteil ist darin begründet, dass die Verwendung derartiger Rechneranordnungen (Cluster) im Wesentlichen die Aufgabe löst, an das Rechnersystem gestellte Anforderungen auf mehrere Rechner zu verteilen (Lastverteilung), um die Geschwindigkeit und die Anzahl gleichzeitig bearbeitbarer Vorgänge zu erhöhen. Dadurch, dass bei derartigen Anordnungen die zu bearbeitenden Anforderungen wegen der gewünschten Lastverteilung nicht gleichzeitig an mehrere Rechner geleitet werden und die Rechner dieser Anordnung nicht synchronisiert sind, führt der Ausfall eines Rechners der Anordnung zwangsläufig mindestens zu einem Verlust einer Teilfunktion und/oder zum Verlust an Information

Eine Rechneranordnung mit mehreren Servern ist beispielsweise in der EP 0 942 363 A2 angegeben. Dabei werden eingehende Anforderungsdaten in Serviceklassen unterteilt, welche dann jeweils von einer bestimmten Anzahl an Servern bearbeitet werden. Wenn nun ein bestimmter Service nicht bearbeitet werden kann, weil die momentan zur Verfügung stehenden Ressourcen an Rechnerkapazität nicht ausreichen, so werden Server aus anderen Serviceklassen herausgelöst, bei denen noch Rechenressourcen zur Verfügung stehen, und dem angeforderten Service zugeordnet.

In der genannten europäischen Offenlegungsschrift ist also ein Rechner-Cluster beschrieben, bei welchem eine Lastverteilung der Anforderungsdaten auf die Server vorgenommen wird, so dass bei einem Ressourcenengpass eines Services ein Server eines anderen Services, welcher noch freie Rechenkapazität hat, einspringt.

Nachteilig dabei ist, dass keine Lösung für den Fehlerfall vorgesehen ist, so dass der Ausfall eines Service zwar nicht den Verlust des betreffenden Service als Ganzes nach sich zieht, aber nicht gewährleistet ist, dass die an den Rechner-Cluster übergebenen Anforderungsdaten im Fehlerfall erhalten bleiben und möglichst unterbrechungsfrei weiterverarbeitet werden können.

Daher eignen sich derartige Rechneranordnungen nicht für kritische Anwendungen, bei denen kein Datenverlust und/oder kein Bearbeitungsverzug auftreten darf, um die Gefährdung von Mensch und Umwelt auszuschließen. Daher verbietet sich der Einsatz derartiger Anordnungen als z.B. Überwachungssystem in Kernkraftwerken, als Schutzsystem bei gefährlichen, beispielsweise elektrischen oder chemischen Prozessen, oder als Bediensystem von zeitkritischen Abläufen.

In der DE 198 14 096 A1 ist ein Verfahren zur Umschaltung redundant geschalteter gleichartiger Baugruppen beschrieben.

Von diesen gleichartigen Baugruppen fungiert eine als Master-Baugruppe, welche einen Automatisierungsprozess bedient. Eine zweite gleichartige Baugruppe befindet sich im sogenannten Slave-Modus (Reserve), um bei einer Störung der Master-Baugruppe deren Funktion übernehmen zu können.

Beide gleichartige Baugruppen werden synchron mit den gleichen Anforderungsdaten von einer übergeordneten Einrichtung versorgt.

Im Fehlerfall der Master-Baugruppe wird die Baugruppe im Slave-Modus direkt unter Umgehung der übergeordneten Einrichtung aktiviert, um die Funktionalität der Master-Baugruppe zu übernehmen. So ist gewährleistet, dass im Fehlerfall eine rasche Umschaltung von einer defekten auf eine funktionsfähige Baugruppe erfolgt.

Es ist jedoch nicht erkennbar, wie im Fehlerfall gewährleistet werden kann, dass keine Anforderungsdaten verloren gehen, und dass die Baugruppe, welche im Fehlerfall die Funktion übernimmt, korrekte Ausgabedaten liefert.

Außerdem ist bei diesem Verfahren aus dem Stand der Technik nachteilig, dass die Baugruppen von gleicher Art sein müssen. Dadurch ist der Einsatz untereinander verschiedener Baugruppen gleicher Funktion zur Lösung des Problems ausgeschlossen, was zu hohen Kosten bei der Realisierung einer derartigen redundanten Anordnung führt. Man könnte z.B. den Hauptrechner (Master) als sehr leistungsfähigen Rechner und den Reserverechner (Slave) als etwas leistungsschwächeren Rechner ausführen. Im Normalfall würde der leistungsfähige Rechner die Funktion der Rechneranordnung übernehmen und nur im Fehlerfall ergäben sich dann leichte Einbußen in der Rechenleistung (wenn der Reserverechner die Funktionalität übernimmt); eine solche im Vergleich zum zitierten Stand der Technik kostengünstigere Rechneranordnung kann jedoch mit dem beschriebenen Verfahren nicht fehlertolerant betrieben werden.

In der WO 98/44416 ist ein fehlertolerantes Computersystem beschrieben.

Dieses umfasst beispielsweise vier oder mehrere CPUs, welche taktsynchron arbeiten.

Ankommende Daten werden von allen CPUs gleichzeitig taktsynchron bearbeitet.

Die CPUs übermitteln ihre Rechenergebnisse an eine Auswerteeinheit, welche die Gültigkeit dieser Ergebnisse ermittelt und ein gültiges Ergebnis ausgibt.

Bei diesem System wird die Fehlertoleranz praktisch ausschließlich in Hardware realisiert. Dies bedeutet, dass untereinander völlig gleichartige Einheiten (CPUs) absolut gleichzeitig (taktsynchron) die selben Eingabedaten bearbeiten und ein zugehöriges Ergebnis liefern. Der Ausfall einer Einheit führt also nicht zum Versagen des ganzen Systems.

Nachteilig dabei ist, dass derartige taktsynchron arbeitende Lösungen sehr kostspielig sind, da der taktsynchron Betrieb hohe Anforderungen an die verwendete Hardware stellt, welche darüber hinaus untereinander von völlig gleicher Art sein muss; Toleranzen sind dabei praktisch nicht zulässig sind. Darüber hinaus ist die Synchronisation der verwendeten Einheiten sehr aufwendig, da die parallel geschalteten Einheiten bei der Bearbeitung der Anforderungsdaten um nicht einmal einen Takt auseinander laufen dürfen. Weiterhin ist es nicht möglich, Hardware von untereinander verschiedener Art einzusetzen, um die Redundanz nach diesem Stand der Technik zu realisieren.

Weitere Beispiele aus dem Stand der Technik für derartige redundante Systeme, welche die Redundanz ausschließlich in Hardware realisieren, sind die sogenannten H-Systeme (hochverfügbare Systeme) der SIMATIC-Automatisierungsfamilie von Siemens (z. B. S5-155H; S7-400H). Dabei werden jeweils zwei untereinander völlig identische, spezielle Zentraleinheiten eingesetzt, welche jeweils die gleichen Anforderungsdaten tatsynchron parallel bearbeiten. Die Synchronisation und Überwachung auf Ausfall der Zentraleinheiten ist sehr aufwendig; darüber hinaus sind die Anschaffungskosten sehr hoch.

Der Erfindung liegt daher die Aufgabe zugrunde, eine fehlertolerante Rechneranordnung anzugeben, welche die beschriebenen Nachteile überwindet, flexibel auch aus unterschiedlichen Komponenten zusammenfügbar und kostengünstig herstellbar ist.

Die Aufgabe wird erfindungsgemäß durch eine fehlertolerante Rechneranordnung mit einer Vermittlungs- und Bearbeitungsebene gelöst, bei der
- die Vermittlungsebene durch mindestens einen Vermittlungs-Rechner gebildet ist, welcher ertüchtigt ist, ankommenden Anforderungsdaten eine Zeitmarkierung zuzuordnen,
- die Bearbeitungsebene durch mindestens zwei Bearbeitungs-Rechner gebildet ist, welche parallel von der Vermittlungsebene mit den Anforderungsdaten versorgt sind,
- die Bearbeitungs-Rechner jeweils ertüchtigt sind, die Anforderungsdaten dann in einem nächsten Bearbeitungsschritt zu bearbeiten, wenn der aktuelle Wert der Zeitmarkierung in einen jeweils signifikanten Wertebereich fällt.

Bei einer derartigen erfindungsgemäßen Anordnung sind die Anforderungsdaten, welche von der Anordnung zu einem Ergebnis zu verarbeiten sind, an den oder die Rechner der Vermittlungsebene (Broker) gerichtet.

Die Vermittlungsebene versieht dabei die ankommenden Anforderungsdaten mit einer Zeitmarkierung, welche beispielsweise das aktuelle Zeitsignal eines Uhrenbausteins oder eine Seriennummer sein kann, welche den Zeitpunkt des Eintreffens der Anforderungsdaten bei der Vermittlungsebene beinhaltet.

Die Anforderungsdaten werden ggf. von der Vermittlungsebene vorverarbeitet und zusammen mit der zugehörigen Zeitmarkierung parallel an die Bearbeitungs-Rechner der Bearbeitungsebene übermittelt. Falls die Bearbeitungsebene aus mehreren Bearbeitungs-Teilebenen (Bearbeitungsunterebenen) besteht, welche jeweils aus mindestens zwei Rechnern gebildet und auf die Bearbeitung jeweils einer bestimmten Anforderungs-Art spezialisiert sind, so werden die Anforderungsdaten je nach ihrer Art von der Vermittlungsebene an die betreffenden Rechner der zuständigen Bearbeitungsunterebene übermittelt.

Eine wesentliche Aufgabe der Vermittlungsebene besteht also darin, die von der erfindungsgemäßen Rechneranordnung zu einem Ergebnis zu verarbeitenden Anforderungsdaten mit einem Eingangs-Zeitstempel zu versehen und an die Rechner der Bearbeitungsebene weiterzuleiten, welche dann die Verarbeitung der Anforderungsdaten zu einem Ergebnis vornehmen.

Eine Fehlertoleranz der erfindungsgemäßen Anordnung gegenüber eines Ausfalls eines der Bearbeitungs-Rechner ist dadurch realisiert, dass die Anforderungsdaten nicht nur wie bei vielen Lösungen des Standes der Technik (sogenannte Cluster-Lösungen) an einen Rechner der Bearbeitungsebene weitergeleitet sind, sondern an alle Rechner der Bearbeitungsebene.

So ist sichergestellt, dass die Anforderungsdaten in der Bearbeitungsebene nicht verloren sind, wenn ein Rechner in dieser Ebene ausfällt.

Die Bearbeitungs-Rechner ermitteln dann jeweils anhand des aktuellen Wertes der Zeitmarkierung, mit welcher die Anforderungsdaten versehen sind, ob diese vom jeweiligen Bearbeitungs-Rechner in einem nächsten Verarbeitungsschritt bearbeitet werden oder nicht.

Dadurch wird verhindert, dass die nicht-synchronisierte parallele Informationsübergabe an die Bearbeitungsebene dazu führt, dass die Bearbeitungs-Rechner unterschiedliche Antworten als Ergebnisse der Anforderungsdaten ermitteln.

Die Bearbeitungsrechner werten den aktuellen Wert der Zeitmarkierung dahingehend aus, dass sie feststellen, ob der aktuelle Wert der Zeitmarkierung in einen jeweils signifikanten Wertebereich fällt.

Die Rechner der Bearbeitungsebene verarbeiten die Anforderungsdaten typischerweise mehreren Bearbeitungsschritten, welche zyklisch aufeinander folgen können. Dies bedeutet beispielsweise, dass alle 100 ms ein neuer Bearbeitungsschritts durchlaufen wird. Erfindungsgemäß werden von den Bearbeitungsrechner in einem bestimmten Bearbeitungszyklus nur diejenigen Daten verarbeitet, deren aktueller Wert der Zeitmarkierung in einen jeweils signifikanten Wertebereich fällt; letzterer kann z.B. aus denjenigen Zeitpunkten bestehen, welche älter sind als der Startzeitpunkt des nächsten Bearbeitungszyklus abzüglich einer maximalen Verzögerungszeit, welche höchstens notwendig ist, um die Daten von der Vermittlungsebene zu den Rechnern der Bearbeitungsebene zu transferieren.

Auf dieses Weise ist sichergestellt, dass die Rechner der Bearbeitungsebene wenigstens zu den Zeitpunkten des Starts ihrer Bearbeitungsschritte die Anforderungsdaten synchron verarbeiten. So wird weiterhin verhindert, dass die Bearbeitungsrechner die Anforderungsdaten wegen eines Zeitverzugs bei der Übermittlung von der Vermittlungsebene voneinander unabhängig, also asynchron, verarbeiten und somit bezüglich der Anforderungsdaten unterschiedliche Ergebnisse berechnen.

Diese beschriebe Art der erfindungsgemäßen Synchronisation wird als "implizite Synchronisation" bezeichnet. Dabei ist nicht erforderlich, dass die einzelnen Rechner zueinander absolut taktsynchron arbeiten. Vielmehr ist dabei entscheidend, dass die Bearbeitungsrechner nur insofern synchronisiert sind, dass sie jeweils nur diejenigen Anforderungsdaten bearbeiten, welche bis zum Startzeitpunkt des nächsten Bearbeitungsschritts noch sicher hinsichtlich der Übermittlungszeit von der Vermittlungsebene an alle Rechner der Bearbeitungsebene übermittelt werden können.

Stellt sich beispielsweise bei einer Überprüfung durch die Bearbeitungsrechner heraus, dass die Anforderungsdaten bezüglich des Startzeitpunkts des nächsten Bearbeitungsschritts zu spät in der Vermittlungsebene angefallen sind (dies lässt sich durch eine Auswertung der Zeitmarkierung feststellen) - die Anforderungsdaten können also nicht sicher bis zum Beginn des Starts des nächsten Bearbeitungsschritts an alle Rechner der Bearbeitungsschicht übermittelt werden -, so werden die Anforderungsdaten von den Bearbeitungsrechner erst in deren übernächstem Bearbeitungsschritt bearbeitet. Auf diese Weise ist die Redundanz der erfindungsgemäßen Anordnung insofern sichergestellt, als dass alle Rechner der Bearbeitungsschicht die Anforderungsdaten bearbeiten und der Ausfall eines dieser Rechner nicht den Verlust der Daten bzw. der Ergebnisse nach sich zieht.

In vorteilhafter Ausgestaltung der Erfindung ist eine Schnittstelle der erfindungsgemäßen Rechneranordnung zur Außenwelt gebildet durch die Vermittlungsebene, welche ankommende Anforderungsdaten von der Außenwelt entgegennimmt und ein zugehöriges berechnetes Ergebnis an die Außenwelt übermittelt.

Für einen Benutzer, welcher von außen mit einer Anforderung an die Rechneranordnung herantritt und ein Ergebnis erhalten will, stellt sich auf diese Weise die Rechenanordnung dar wie ein einziger Rechner. Sowohl die Eingabe- als auch die Ausgabedaten werden von nur einer Schnittstelle transferiert.

In einer weiteren vorteilhaften Ausgestaltung der Erfindung ist die Vermittlungsebene ertüchtigt, die von den Bearbeitungs-Rechnern zu den Anforderungsdaten berechneten Ergebnisse aufgrund einer vorgegebenen Gültigkeitsregel zu bewerten, ausgehend von dieser Bewertung aus den Ergebnissen eines auszuwählen und an die Außenwelt zu übermitteln.

Bei der erfindungsgemäßen Rechneranordnung werden Anforderungsdaten aus Gründen der Redundanz von mehreren Bearbeitungsrechner verarbeitet. Als Ergebnis der Anforderungsdaten soll aber nur eines dieser Ergebnisse an die Außenwelt übermittelt werden; der Benutzer soll ein eindeutiges Ergebnis erhalten und nicht in die Lage kommen, aus u.U. sich unterscheidenden Ergebnissen eines auswählen zu müssen.

Mit Hilfe einer vorgegebenen Gültigkeitsregel beurteilt daher die Vermittlungsebene, welches der genannten Ergebnisse an die Außenwelt übermittelt wird.

Eine Gültigkeitsregel kann beispielsweise darin bestehen, dass die Vermittlungsebene die von den Bearbeitungs-Rechnern zu den Anforderungsdaten ermittelten Ergebnisse untereinander vergleicht und feststellt, wie viele dieser Ergebnisse übereinstimmen. Wenn die Anzahl der übereinstimmenden Ergebnisse größer ist als die Anzahl der nicht übereinstimmenden Ergebnisse, so wird eines der Ergebnisse aus der Gruppe der übereinstimmenden Ergebnisse als gültiges Ergebnis an die Außenwelt übermittelt.

Die Gültigkeitsregel kann noch dadurch verschärft werden, dass z.B. nur dann ein gültiges Ergebnis an die Außenwelt übermittelt wird, wenn alle Ergebnisse der Bearbeitungs-Rechner übereinstimmen. So ist die Sicherheit am größten, dass das Ergebnis richtig ist.

Vorteilhaft ist die Vermittlungsebene durch mindestens zwei Vermittlungs-Rechner gebildet und jeder dieser Vermittlungs-Rechner ist ertüchtigt, eine Fehlfunktion mindestens eines anderen Vermittlungs-Rechners zu detektieren und dessen Funktion zu übernehmen.

Auf diese Weise wird eine Redundanz der erfindungsgemäßen Rechneranordnung auch hinsichtlich der Funktion der Vermittlungsebene realisiert. Bein Ausfall eines der Rechner der Vermittlungsebene erkennt dies mindestens ein anderer Rechner der Vermittlungsebene. Er übernimmt daraufhin die Funktion des fehlerhaften Vermittlungs-Rechners und verarbeitet die eingehenden Anforderungsdaten.

Die genannte Fehlererkennung in der Vermittlungsebene kann beispielsweise dadurch realisiert sein, dass die Vermittlungs-Rechner untereinander periodische Signale austauschen (Heartbeat, Watchdog), welche auf stetiges Vorhandensein überprüft werden. Tritt nun ein solches Signal für einen der Rechner der Vermittlungsebene beispielsweise für mindestens einen Taktzyklus nicht auf, so wird der betreffende Rechner als fehlerhaft gekennzeichnet und dessen Funktion von einem anderen Rechner der Vermittlungsebene übernommen. Vorteilhaft sind die Vermittlungs-Rechner über einen Kommunikationsbus verbunden, auf welchen die Anforderungsdaten übermittelt sind. Auf diese Weise hat jeder der Rechner der Vermittlungsebene Zugriff auf die Anforderungsdaten, so dass im Falle eines Fehlers eines der Rechner ein anderer Rechner einspringen kann.

In weiterer vorteilhafter Ausgestaltung der Erfindung ist die Bearbeitungsebene unterteilt in mindestens zwei Bearbeitungsunterebenen, welche jeweils durch mindestens zwei Rechner gebildet und zur Bearbeitung jeweils einer bestimmten Anforderung vorgesehen sind. Bei dieser vorteilhaften Ausgestaltung der Erfindung ist jede Bearbeitungsunterebene spezialisiert auf die Bearbeitung jeweils einer bestimmten Art von Anforderungsdaten. Da jede Bearbeitungsunterebene aus mindestens jeweils zwei Rechnern gebildet ist, führt ein Fehler eines dieser Rechner nicht zum Verlust der betreffenden Funktion.

Die Bildung von Bearbeitungsunterebenen sorgt für eine Lastverteilung der Anforderungsdaten auf die Bearbeitungsrechner, so dass die zur Verfügung stehende Rechnerleistung gut ausgenutzt ist.

Vorteilhaft ist jeder Bearbeitungsunterebene mindestens einer der Vermittlungs-Rechner als deren Anforderungs-Vermittlungs-Rechner zugeordnet.

In dieser vorteilhaften Ausgestaltung der Erfindung ist die Lastverteilung innerhalb der Anordnung weiter verbessert, da auch die Vermittlungs-Rechner aufgabenspezifisch eingesetzt sind. Wenn man nun für jede Aufgabe (Art der Anforderungsdaten) mindestens zwei Rechner als Anforderungs-Vermittlungs-Rechner vorsieht, so ist eine Redundanz auch in der Vermittlungsebene für jede Aufgabe realisiert.

Die Erfindung führt weiterhin zu einem Verfahren zum Betrieb einer fehlertoleranten Rechneranordnung mit einer Vermittlungs- und einer Verarbeitungsebene mit folgenden Schritten:
1. Ankommende Anforderungsdaten werden von mindestens einem Vermittlungs-Rechner der Vermittlungsebene eingelesen und mit einer Zeitmarkierung versehen.
2. Die mit der Zeitmarkierung versehenen Anforderungsdaten werden durch den Vermittlungs-Rechner parallel an die mindestens zwei Bearbeitungs-Rechner der Bearbeitungsebene weitergeleitet und
3. die Anforderungsdaten werden von den Bearbeitungsrechnern jeweils in einem nächsten Bearbeitungsschritt bearbeitet, wenn der aktuelle Wert der Zeitmarkierung in einen jeweils signifikanten Wertebereich fällt.

In vorteilhafter Ausgestaltung der Erfindung werden von den Bearbeitungs-Rechner in Schritt 3 berechnete, zu den Anforderungsdaten zugehörige Ergebnisse, vom Vermittlungsrechner aufgrund einer vorgegebenen Gültigkeitsregel bewertet und aufgrund dieser Bewertung wird eines dieser Ergebnisse ausgewählt.

In weiterer vorteilhafter Ausgestaltung der Erfindung werden die Anforderungsdaten von mindestens zwei Vermittlungs-Rechnern parallel eingelesen.

Im Folgenden werden drei Ausführungsbeispiele der Erfindung näher dargestellt.
Es zeigen:
- FIG 1: eine erfindungsgemäße Rechneranordnung mit mehreren Vermittlungs-Rechnern sowie einer in mehrere Bearbeitungsunterebenen gegliederten Bearbeitungsebene,
- FIG 2: eine erfindungsgemäße Rechneranordnung mit einem Vermittlungsrechner und zwei Bearbeitungsrechnern, wobei die implizite Synchronisation näher dargestellt ist,
- FIG 3: Zeitdiagramme zur Darstellung des zeitlichen Verlaufs von Anforderungsdaten, welche von der Vermittlungsebene an die Bearbeitungsebene übermittelt werden.

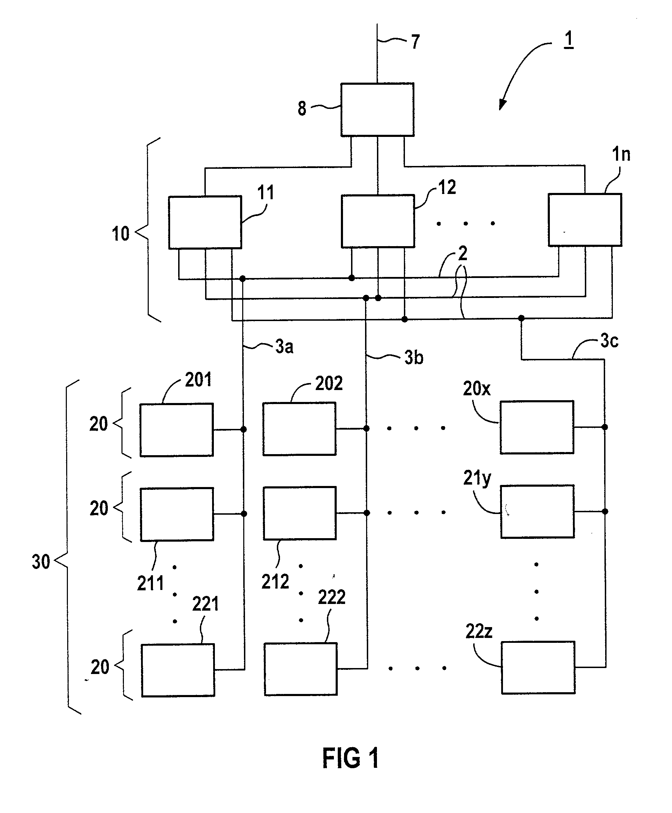

FIG 1 zeigt eine Rechneranordnung 1 mit einer Vermittlungsebene 10 sowie einer Bearbeitungsebene 30.

Die Vermittlungsebene 10 enthält Vermittlungs-Rechner 11, 12, In, an welche Anforderungsdaten 7 durch ein Vermittlungsmodul 8 gerichtet sind. Dabei erhalten alle Rechner der Vermittlungsebene parallel die gleichen Anforderungsdaten.

Die Vermittlungs-Rechner 11, 12, In sind untereinander durch Kommunikationsverbindungen 2 verbunden. An jeweils eine dieser Kommunikationsverbindungen 2 sind mindestens jeweils ein Bearbeitungsrechner jeder Bearbeitungsunterebene 20 mittels einer Kommunikationsverbindungen 3a, 3b, 3c angeschaltet.

Jede Bearbeitungsunterebene 20, welche durch mehrere Bearbeitungsrechner 201, 202, 20x, 211, 212, 21y, 221, 222, 22z gebildet ist, dient zur Bearbeitung jeweils einer bestimmten Art von Anforderungsdaten 7; jede Bearbeitungsunterebene 20 ist also insofern auf die Bearbeitung einer bestimmten Aufgabe spezialisiert.

Durch die Art der Ausführung der Kommunikationsverbindungen 2, 3a, 3b, 3c wird verhindert, dass ein Versagen irgend einer dieser Kommunikationsverbindungen 2, 3 zu einem Verlust von Daten und/oder zum Verlust einer durch eine Bearbeitungsunterebene 20 bereitgestellten Funktion führt. Fällt beispielsweise die Kommunikationsverbindung 3a aus, so können die Bearbeitungsunterebenen 20 mittels der Kommunikationsverbindung 3b mit Anforderungsdaten versorgt werden.

Desweiteren führt auch der Ausfall irgend eines der Rechner der Vermittlungs- oder Bearbeitungsebene nicht zu einem Verlust an Information und/oder Funktion, da diese jeweils mehrfach ausgeführt sind:

Jede Aufgabe, welche in einer der Bearbeitungsunterebenen 20 bearbeitet wird, wird dort von mehreren Bearbeitungs-Rechnern bearbeitet, so dass der Ausfall eines dieser Rechner nicht zum Verlust der Funktion der jeweiligen Bearbeitungsunterebene 20 führt.

Weiterhin führt ein Ausfallen eines der Vermittlungs-Rechner 11, 12, In nicht zum Verlust der Funktion der Vermittlungsebene 10, da die Anforderungsdaten 7 mittels des Vermittlungsmoduls 8 an alle Rechner der Vermittlungsebene übergeben werden und jeder der Vermittlungs-Rechner 11, 12, 1n wegen der besonderen Ausgestaltung der Kommunikationsverbindungen 2, 3a, 3b, 3c Datenzugriff auf alle Bearbeitungs-Rechner der Bearbeitungsebene 30 hat. Der Verlust der Funktion eines der Vermittlungs-Rechner der Vermittlungsebene 10 wird also durch die Übernahme dessen Funktion durch einen anderen Vermittlungs-Rechner neutralisiert.

In der Vermittlungsebene 10 sowie in jeder Bearbeitungsunterebenen 20 der Bearbeitungsebene 30 können folglich jeweils alle Rechner bis auf jeweils einen ausfallen und/oder fehlerhaft arbeiten, ohne dass die Gesamtfunktion der erfindungsgemäßen Rechneranordnung 1 eingebüßt wird.

Die Rechner jeder Bearbeitungsunterebene 20 bearbeiten die erhaltenen Anforderungsdaten, welche mit einer Zeitmarkierung versehen sind, dann in einem nächsten Bearbeitungsschritt, wenn der Wert der Zeitmarkierung in einen signifikanten Wertebereich fällt. Ist dies nicht der Fall, stellen sie die Bearbeitung zunächst bis zum übernächsten Bearbeitungsschritt zurück. Die Bearbeitungsschritte können dabei zylindrisch aufeinanderfolgen (Bearbeitungszyklen als Spezialfall von Arbeitsschritten).

Vorteilhaft beginnen die Bearbeitungsschritte der Bearbeitungsrechner jeweils zum gleichen Zeitpunkt, so dass die Bearbeitungsrechner zwar nicht takt-synchronisiert, aber wenigstens hinsichtlich des gemeinsamen Beginns ihrer Bearbeitungsschritte synchronisiert sind (dies ist vom Begriff "implizite Synchronisation" umfasst).

Die Rechner 11,12,...1n der Vermittlungsebene 10 können untereinander analog zur beschriebenen implizierten Synchronisierung der Bearbeitungsrechner ebenfalls implizit synchronisiert sein.

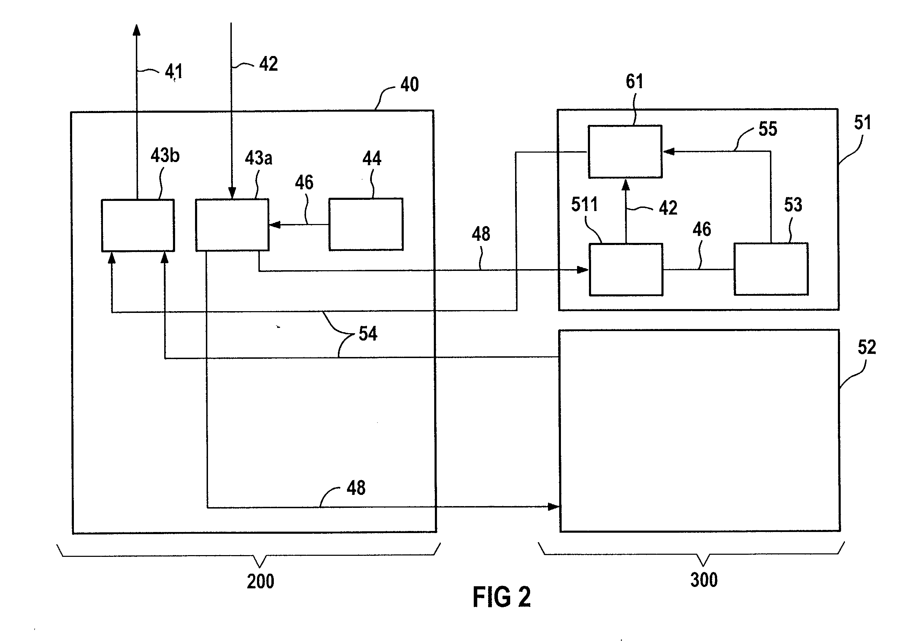

FIG 2 zeigt eine erfindungsgemäße Rechneranordnung mit einer Vermittlungsebene 200, welche durch einen Vermittlungs-Rechner 40 gebildet ist und eine Bearbeitungsebene 300, welche zwei Bearbeitungs-Rechner 51, 52 enthält.

Anforderungsdaten 42 werden in ein Eingabemodul 43a eingelesen. Ein Zeitsignalgeber 44 übermittelt eine Zeitmarkierung 46 an das Eingabemodul 43a.

Im Eingabemodul 43a werden die Anforderungsdaten 42 mit der Zeitmarkierung 46 versehen und als zeitmarkierte Anforderungsdaten 48 parallel an die beiden Bearbeitungsrechner 51, 52 gesendet. In den Bearbeitungsrechnern 51, 52 trennt ein Verarbeitungsbaustein 511 die Zeitmarkierung 46 von den Anforderungsdaten 42 ab und übergibt die Anforderungsdaten 42 an ein Anwendungsprogrammmodul 61.

Die abgetrennte Zeitmarkierung 46 wird vom Verarbeitungsbaustein 511 an ein Bearbeitungsmodul 53 übermittelt. In diesem Bearbeitungsmodul 53 wird die Zeitmarkierung 46 daraufhin überprüft, ob ihr Wert in einen signifikanten Wertebereich fällt. Dies kann z.B. dann der Fall sein, wenn die Anforderungsdaten 42 in der Vermittlungsebene 200 so frühzeitig angefallen sind, dass sie nach einer Übermittlung durch die Vermittlungsebene 200 an die Bearbeitungs-Rechner 51, 52 - wofür höchstens eine maximale Übermittlungsverzugszeit notwendig ist -, bei allen Bearbeitungs-Rechnern ankommen, bevor ein nächster Bearbeitungsschritt der Bearbeitungs-Rechner beginnt. Die jeweiligen Zeitpunkte für den Beginn des jeweils nächsten Bearbeitungsschritt in jedem der Bearbeitungs-Rechner sind dabei bei allen Bearbeitungs-Rechnern vorteilhaft gleich.

Auf diese Weise wird eine "implizite Synchronisation" realisiert und so verhindert, dass die Bearbeitungs-Rechner 51, 52 "auseinanderlaufen", also zum Zeitpunkt des Starts von Bearbeitungsschritten unterschiedliche Daten verarbeiten und so unterschiedliche Ergebnisse liefern.

Wenn der aktuelle Wert der Zeitmarkierung 46 in einen - beispielsweise wie oben ausgeführten - signifikanten Wertebereich fällt, so gibt das Bearbeitungsmodul 53 ein Steuersignal 55 an das Anwendungsprogrammmodul 61, so dass dieses die Bearbeitung die Anforderungsdaten 42 vornimmt und resultierende Ergebnisdaten 54 an ein Ausgabemodul 43b des Vermittlungs-Rechners 40 sendet. Stellt nun das Bearbeitungsmodul 53 bei der Auswertung der Zeitmarkierung 46 fest, dass deren aktueller Wert nicht in einen signifikanten Wertebereich fällt, also beispielsweise die Anforderungsdaten nicht sicher bis zum Beginn des nächsten Bearbeitungsschritt der Bearbeitungs-Rechner an alle Bearbeitungs-Rechner übermittelt werden konnten, so erzeugt das Bearbeitungsmodul 53 erst für den übernächsten Bearbeitungszyklus ein Steuersignal 55, so dass das Anwendungsprogrammmodul 61 die Anforderungsdaten 42 erst im übernächsten Bearbeitungszyklus bearbeitet. Dies gilt für alle beteiligten Bearbeitungs-Rechner 51, 52, so dass diese in dieser Hinsicht synchronisiert sind.

Die Bearbeitungs-Rechner 51, 52 übermitteln die von ihnen berechneten Ergebnisdaten 54 an das Ausgabemodul 43b des Vermittlungs-Rechners 40. Im Ausgabemodul 43b werden nun die Ergebnisdaten 54, bewertet und davon ein Ergebnis 41 ausgegeben.

Die Bewertung im Ausgabemodul 43b kann beispielsweise in einem Vergleich der von den Bearbeitungs-Rechnern 51, 52 gelieferten Ergebnisdaten 54 bestehen. Wenn beide Ergebnisse gleich sind, so wird vom Ausgabemodul 43b irgend eines dieser Ergebnisse als Ergebnis 41 ausgegeben.

Wenn nun die beiden Ergebnisse nicht übereinstimmen, so kann das Ergebnis 41 beispielsweise in einer Fehlermeldung bestehen. Wenn einer der Bearbeitungs-Rechner 51, 52 im Falle eines Fehlers überhaupt keine Ergebnisdaten 54 liefern kann, so wählt das Ausgabemodul 43b die Ergebnisdaten 54 des funktionsfähigen Bearbeitungsrechners als Ergebnis 41 aus.

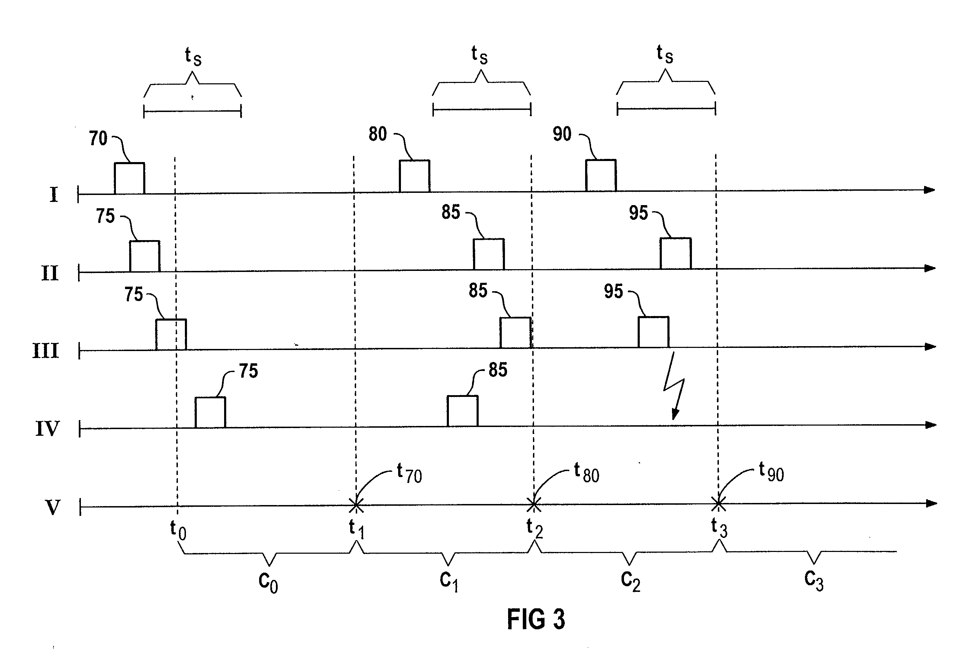

In FIG 3 ist im Zeitstrahl I der zeitliche Verlauf des Anfalls von Anforderungsdaten 70, 80, 90 dargestellt, welche von der Vermittlungsebene mit jeweils einer Zeitmarkierung entsprechend des Zeitpunkts des Datenanfalls versehen und an alle Bearbeitungs-Rechner der Bearbeitungsebene übermittelt werden. Die Anforderungsdaten 70, 80, 90 fallen in bestimmten zeitlichen Abständen voneinander in der Vermittlungsebene an.

Die Zeitstrahlen II, III, IV, V sind den Rechnern der Bearbeitungsebene zugeordnet, wobei die Zeitstrahlen II, III, IV die Zeitpunkte des Eintreffens der Anforderungsdaten 70, 80, 90 als mit einer Zeitmarkierung versehene Anforderungsdaten 75, 85 bzw. 95 drei Bearbeitungs-Rechnern zeigen.

Der Zeitstrahl V veranschaulicht die Verarbeitungszeitpunkte t₇₀, t₈₀, t₉₀, zu welchen die ursprünglichen Anforderungsdaten 70, 80 bzw. 90 von den Bearbeitungs-Rechnern dann verarbeitet werden. Die Zeitpunkt t₀, t₁, t₂, t₃ sind Startzeitpunkte für Bearbeitungsschritte C₀, C₁, C₂, C₃ der Bearbeitungs-Rechner. Die Bearbeitungsschritte können zyklisch aufeinander folgen. Beispielsweise ist 100 ms eine typische Größe für die Dauer eines Bearbeitungszyklus; es sind jedoch auch andere, insbesondere kürzere Zyklusdauern möglich.

Die maximale Übermittlungsverzugszeit tₛ ist das Zeitintervall, welches maximal nötig ist, um Anforderungsdaten 70, 80, 90 sicher an alle Rechner der Bearbeitungsebene zu senden, selbst wenn die Kommunikationsverbindungen zwischen den Bearbeitungs-Rechnern und der Vermittlungsebene und/oder die Bearbeitungs-Rechner untereinander nicht von gleicher Art, insbesondere unterschiedlich schnell, sind. Die maximale Übermittlungsverzugszeit tₛ enthält vorteilhaft eine Zeitreserve, so dass auch unter ungünstigsten Übertragungsverhältnissen die Datenübermittlung von der Vermittlungsebene zur Bearbeitungsebene nicht länger dauert als die maximale Übermittlungsverzugszeit tₛ.

Die Anforderungsdaten 70 werden von der Vermittlungsebene mit einer Zeitmarkierung versehen und als Anforderungsdaten 75 an die Bearbeitungsebene übermittelt. Wie aus FIG 3 ersichtlich ist, treffen die Anforderungsdaten 75 bei den drei Rechnern der Bearbeitungsebene zu unterschiedlichen Zeitpunkten ein. Die Zeitstrahlen III, IV zeigen, dass die Anforderungsdaten 75 bei zwei der drei Bearbeitungsrechner nicht rechtzeitig zum Beginn t₀ des nächsten Bearbeitungsschritt C₀ eintreffen; die Zeitmarkierung der Anforderungsdaten 75 liegt nicht in einem signifikanten Wertebereich. Aus diesem Grund nehmen die Rechner der Bearbeitungsebene die Bearbeitung der Anforderungsdaten 75 erst zum Zeitpunkt t₇₀ auf, was dem Beginn des übernächsten Bearbeitungsschritts C₁ entspricht. Auf diese Weise ist sichergestellt, dass die Anforderungsdaten 75 redundant von mehreren, insbesondere allen, Bearbeitungs-Rechnern bearbeitet werden.

Die Anforderungsdaten 80 werden rechtzeitig vor dem Beginn des Bearbeitungsschritts C₂ an alle Rechner der Bearbeitungsebene gesendet, so dass diese die Bearbeitung der zeitmarkierten Anforderungsdaten 85 bereits zum Zeitpunkt t₈₀ des Beginns des nächsten Bearbeitungsschritts C₂ nach Anfall der Daten 80 aufnehmen. Im letztgenannten Fall fällt also die Zeitmarkierung der Anforderungsdaten 85 in einen signifikanten Wertebereich, so dass die Bearbeitung durch die Bearbeitungs-Rechner bereits im nächsten, auf den Zeitpunkt des Datenanfalls der Anforderungsdaten folgenden Bearbeitungsschritt C₂ erfolgt.

Die Anforderungsdaten 90 werden ebenfalls von der Vermittlungsebene mit einer Zeitmarkierung versehen und an die Rechner der Bearbeitungsebene geleitet, wo sie bei zwei der Beareitungs-Rechner rechtzeitig vor Beginn des nächsten Bearbeitungsschritts ankommen. Beim dritten Rechner der Bearbeitungsebene tritt jedoch ein Fehler auf, so dass die Anforderungsdaten 95 von diesem nicht bearbeitet werden können. Jedoch fällt die Zeitmarkierung der Anforderungsdaten 95 in einen signifikanten Wertebereich, da sie bei den funktionsfähigen Rechnern der Bearbeitungsebene rechtzeitig vor Beginn des nächsten Bearbeitungsschritts eingegangen sind, so dass diese die Bearbeitung der Anforderungsdaten 95 zum Zeitpunkt t90 des Beginns des nächsten Bearbeitungsschritts C₃ übernehmen. Trotz des Fehlers eines oder mehrerer Rechner der Bearbeitungsebene werden die Anforderungsdaten 95 von den funktionsfähigen Rechnern der Bearbeitungsebene verarbeitet. Der Fehler führt also nicht zu einem Verlust an Daten oder berechneten Ergebnissen.

## Patentansprüche

1. Fehlertolerante Rechneranordnung (1) mit einer Vermittlungs- (10) und einer Bearbeitungsebene (30),
**dadurch gekennzeichnet, dass**
- die Vermittlungsebene (10) durch mindestens einen Vermittlungs-Rechner (11, 12, 1n) gebildet ist, welcher ertüchtigt ist, ankommenden Anforderungsdaten (7) eine Zeitmarkierung (46) zuzuordnen,
- die Bearbeitungsebene (30) durch mindestens zwei Bearbeitungs-Rechner (201, 202, 20x, 211, 212, 21y, 221, 222, 22z) gebildet ist, welche parallel von der Vermittlungsebene (10) mit den Anforderungsdaten (7) versorgt sind, und
- die Bearbeitungs-Rechner jeweils ertüchtigt sind, die Anforderungsdaten (7) dann in einem nächsten Bearbeitungsschritt (C₀, C₁, C₂) zu bearbeiten, wenn der aktuelle Wert der Zeitmarkierung (46) in einen jeweils signifikanten Wertebereich fällt.

2. Rechneranordnung nach Anspruch 1,
**dadurch gekennzeichnet, dass** eine Schnittstelle zur Außenwelt gebildet ist durch die Vermittlungsebene (10), welche ankommende Anforderungsdaten (7) von der Außenwelt entgegen nimmt und ein zugehöriges berechnetes Ergebnis (41) an die Außenwelt übermittelt.

3. Rechneranordnung nach Anspruch 2,
**dadurch gekennzeichnet, dass**
die Vermittlungsebene (10) ertüchtigt ist, die von den Bearbeitungs-Rechnern zu den Anforderungsdaten (7) berechneten Ergebnisse (54) aufgrund einer vorgegebenen Gültigkeitsregel zu bewerten, ausgehend von dieser Bewertung aus den Ergebnissen (54) ein Ergebnis (41) auszuwählen und an die Außenwelt zu übermitteln.

4. Rechneranordnung nach einem der Ansprüche 1 bis 3,
**dadurch gekennzeichnet, dass**
die Vermittlungsebene (10) durch mindestens zwei Vermittlungs-Rechner (11, 12, 1n) gebildet ist und jeder dieser Vermittlungs-Rechner ertüchtigt ist, eine Fehlfunktion mindestens eines anderen Vermittlungs-Rechners (11, 12, 1n) zu detektieren und dessen Funktion zu übernehmen.

5. Rechneranordnung nach einem der Ansprüche 1 bis 4,
**dadurch gekennzeichnet, dass**
die Bearbeitungsebene (30) unterteilt ist in mindestens zwei Bearbeitungsunterebenen (20), welche jeweils durch mindestens zwei Rechner gebildet und zur Bearbeitung jeweils einer bestimmten Anforderung vorgesehen sind.

6. Rechneranordnung nach Anspruch 5,
**dadurch gekennzeichnet, dass**
jeder Bearbeitungsunterebene (20) mindestens einer der Vermittlungs-Rechner (11, 12, 1n) als deren Anforderungs-Vermittlungsrechner zugeordnet ist und dieser auf die Vermittlung von Anforderungsdaten einer bestimmten Art spezialisiert ist.

7. Verfahren zum Betrieb einer fehlertoleranten Rechneranordnung (1) mit einer Vermittlungs- (20) und einer Bearbeitungsebene (30),
**gekennzeichnet durch** folgende Schritte:
a) Ankommende Anforderungsdaten (7) werden von mindestens einem Vermittlungs-Rechner (11, 12, 1n) der Vermittlungsebene (10) eingelesen und mit einer Zeitmarkierung (46) versehen,
b) die mit der Zeitmarkierung (46) versehenen Anforderungsdaten (7) werden **durch** den Vermittlungs-Rechner (11, 12, 1n) parallel an die mindestens zwei Bearbeitungs-Rechner (201, 202, 20x, 211, 212, 21y, 221, 222, 22z) der Bearbeitungsebene (30) weiter geleitet, und
c) die Anforderungsdaten (7) werden von den Bearbeitungs-Rechnern jeweils in einem nächsten Bearbeitungsschritt (C₀, C₁, C₂) bearbeitet, wenn der aktuelle Wert der Zeitmarkierung (46) in einen jeweils signifikanten Wertebereich fällt.

8. Verfahren nach Anspruch 7,
**dadurch gekennzeichnet, dass** von den Bearbeitungs-Rechnern in Schritt c) berechnete, zu den Anforderungsdaten (7) zugehörige Ergebnisse (54), vom Vermittlungs-Rechner (11, 12, 1n) aufgrund einer vorgegebenen Gültigkeitsregel bewertet werden und aufgrund dieser Bewertung ein Ergebnis (41) aus der Gruppe der Ergebnisse (54) ausgewählt wird.

9. Verfahren nach einem der Ansprüche 7 oder 8,
**dadurch gekennzeichnet, dass** ankommende Anforderungsdaten (7) von mindestens zwei Vermittlungs-Rechnern (11, 12, 1n) parallel eingelesen werden.
